# EUROPEAN PATENT APPLICATION

(11) **EP 2 621 058 A1**
(43) Date of publication of application: **31.07.2013**
(21) Application number: 12152694.1
(22) Date of filing: 26.01.2012
(51) Int. Cl.: H02K 3/12, H02K 9/19, H02K 9/22

(54) **Device for cooling and connecting rods of a stator winding**

(71) Applicant: Siemens Aktiengesellschaft, 80333 München (DE)
(72) Inventor: Kimiabeigi, Mohammad, Sheffield, S6 1SE (GB); Thomas, Arwyn, Brithdir, SY22 5HF (GB)

(57) **Abstract**

It is described a cooling connecting device for a stator segment for a stator of an electrical machine, in particular a generator, the cooling connecting device for dissipating heat from electrically interconnected end sections of two interrelated parts of a coil, wherein each part is accommodated in a recess of a body of the stator segment and wherein the end sections project outwardly from the body of the stator segment. The cooling connecting device comprises an interconnecting channel being adapted to electrically interconnect end sections of the two interrelated parts of the coil in such a manner that a closed circuit is provided for the coil, terminal means, wherein the terminal means are formed to connect the end sections of the two interrelated parts of the coil to the interconnecting channel, and a cooling module being attached to the interconnecting channel and being adapted to dissipate heat from the end sections via the interconnecting channel. Further a stator segment, a stator, a generator and a corresponding method for dissipating heat are described.

## Description

### Field of invention

The present invention relates to a cooling connecting device for a stator segment for a stator of an electrical machine, in particular a generator, for dissipating heat from electrically interconnected end sections of two interrelated parts of a coil. Further, the present invention relates to a stator segment comprising such a cooling connecting device. Furthermore, the present invention relates to a stator comprising the stator segment. Moreover, the present invention relates to a generator comprising the stator, for instance for a wind turbine. Beyond this, the present invention relates to a method for dissipating heat from electrically interconnected end sections of two interrelated parts of a coil.

### Art Background

An electrical machine, for example a generator, may consist of a rotor and a stator, the stator comprising one or more coils. The end of the coils, extending to the outside of the stator, for instance of a PM generator, are also called end coils.

The end windings, for instance of a multi-pole multi MW generator, utilize a considerable amount of active material, for example copper, to simply close the circuit of the currents within each phase, for instance in a three phase generator. This means that end sections of interrelated parts of a coil need to be connected or contacted to close the circuit. However, these end sections of the windings do not contribute to the torque production of the generator, and to add to their disadvantages, they may form a considerable portion of Joule loss which not only reduces the overall efficiency of the generator, but also is conventionally difficult to be cooled away as the coil ends, unlike the active part of the coils, are placed in air which has a poor thermal conductivity compared to stator laminations.

End windings can be shortened in length by changing the winding configuration and using fractional slot machines with non-over lapping windings. Furthermore, the end coils are conventionally cooled down using air cooling system and convection whose efficiency is rather poor and may result in local hot spots. An approach to cool the end coils was to fill the end coil regions with a medium with better thermal conductivity than air and then placing liquid cooling pipes in that medium. However, this method is expected to be rather tedious to implement for wind generators due to the limitation of space, while the thermal conductivity of the medium is practically low as it needs to have high electrical resistivity to avoid a short circuit between different phases in the end coil region.

Thus, there may be a need for an improved system for dissipating heat from the end coils.

### Summary of the Invention

This need may be met by the subject matter according to the independent claims. Advantageous embodiments of the present invention are described by the dependent claims.

According to an embodiment, a cooling connecting device for a stator segment for a stator of an electrical machine, in particular a generator, the cooling connecting device for dissipating heat from electrically interconnected end sections of two interrelated parts of a coil, wherein each part is accommodated in a recess of a body of the stator segment and wherein the end sections project outwardly from the body of the stator segment, is provided. The cooling connecting device comprises an interconnecting channel being adapted to electrically interconnect end sections of the two interrelated parts of the coil in such a manner that a closed circuit is provided for the coil, terminal means, wherein the terminal means are formed to connect the end sections of the two interrelated parts of the coil to the interconnecting channel, and a cooling module being attached to the interconnecting channel and being adapted to dissipate heat from the end sections via the interconnecting channel.

This embodiment is based on the idea that a cooling connecting device may be used for interconnecting the end sections of two interrelated parts of a coil which is arranged in an analogue manner to a circuit board. This means that the end sections may be inserted, via the terminal means, to the connecting device in a similar manner as components would be inserted into a circuit board. At the same time, the cooling connecting device may be used for cooling these end sections by dissipating heat from these sections.

According to this embodiment, a simple and efficient method is introduced to electrically interconnect the end sections of two interrelated parts of a coil and to dissipate heat from the interconnected end sections. The two interrelated parts of the coil form, after connecting the end sections, the complete coil with a closed current circuit. In common systems, the end sections would be connected via any kind of physical coupling, for instance using soldering or welding. By using a connecting device as described herein, a simple connecting mechanism may be achieved.

By using a cooling module, as described herein, heat may be easily removed from the interconnected end sections, i.e., the end coils. The cooling module may be attached to the connecting part of the cooling connecting device, the connecting part comprising the terminal means and the interconnecting channel.

"End sections of two interrelated parts of a coil" in this context may denote that one coil, which is accommodated in recesses of the stator segment, may consist of two parts. Conventionally, each coil belonging to any phase is comprised of two sides which are located in the axially extended stator slots and are connected together outside forming the so-called end coils (via coupling the end sections). As the current through the windings inherently has opposite directions in the two sides of each coil, one side may be called Go side and the other Return side, meaning Go and Return of the current within the closed loop of the coil.

"Interconnecting channel" in this context may refer to any kind of conductor or conducting element being able to provide an electrical connection between the end sections. The interconnecting channels may also be in the form of conducting paths.

"Terminal means" in this context may denote for instance receiving means like slots or plugs or any other kind of element being able to connect with the end sections.

"Dissipating heat" in this context may denote that any heat which may occur at the end sections may be dissipated or lead away from the end sections.

"Cooling module" may denote any kind of module which is able to dissipate heat from the end sections. The cooling module may be for instance a cooling fan or condenser being attached to the connecting part of the device.

The herein described cooling connecting device may be used for a stator of a generator of a wind turbine. It may also be used for any other kind of electrical machine, like a motor.

The terminal means for connecting the end sections of the two interrelated parts of the coil may be arranged adjacent to each other, and the interconnecting channel may be adapted to electrically coupling the terminal means. The terminal means for the two interrelated parts of the coil may be arranged in direct neighbouring. Such an embodiment may be for instance used for stators, wherein the coils are not overlapping. The interconnecting channel may be arranged to couple the terminal means.

The cooling connecting device may comprise a plurality of terminal means for connecting a plurality of end sections, wherein two respective terminal means may be adapted to connect two respective end sections being associated with two interrelated parts of one coil. The stator segment may comprise more than one coil. For electrically coupling the end sections of each coil, the cooling connecting device may comprise more than two terminal means.

The connecting device may also comprise a plurality of interconnecting channels, wherein each interconnecting channel may be adapted to electrically interconnect two respective end sections being associated with two interrelated parts of one coil. Each couple of terminal means, being associated with one coil, may be electrically coupled by an interconnecting channel. Such an interconnecting channel may be realized for instance in the form of a conducting layer, in an analogue manner to a circuit board.

The cooling connecting device may further comprise at least one insulating layer for electrically insulating at least one of the plurality of interconnecting channels against the other interconnecting layers. The interconnecting channels may be insulated against each other by using an insulating layer. Such an insulating layer may comprise for instance an electrically insulating, thermally conductive layer. Thus, the interconnecting channels are insulated and at the same time, heat may be dissipated, in addition to the cooling module.

The plurality of interconnecting channels may be arranged in overlaying layers, wherein each overlaying layer may correspond to one of the group of interconnecting channels. Here, the connecting device may be arranged in a sandwich-like manner. Conductive layers, representing the interconnecting channels, may be arranged over each other.

Each overlaying layer may be associated with one electrical phase and insulating layers may be arranged between the overlaying layers. Each overlaying layer may be realized by a conductive layer. To avoid a short circuit between coils of different phases, an insulating layer may be arranged between the overlaying layers.

The terminal means may project outwardly from the connecting device. This may provide the advantage that the end sections of the two interrelated parts of the coil may be easily inserted or plugged into the terminal means.

According to a further embodiment, the cooling module comprises a pipeline having a cooling fluid, the pipeline being attached to the interconnecting channel for receiving heat from the interconnecting channel.

According to the described embodiment, the end path of the conductor bars, i.e., the end sections, may be closed by the connecting part of the cooling connecting device, based on the circuit board concept as explained above. An effective cooling of the end coils, i.e., the end sections, can be achieved by cooling the losses of the end coils via a fluid, for instance a liquid, cooling system whose pipelines or pipes may be directly attached to the circuit board, i.e., the interconnecting channel.

"Pipelines" in this context may denote any kind of pipeline or tube being able to conduct a fluid for cooling. The pipelines may be elastic or rigid.

According to a further embodiment, the cooling module comprises a cooling source, wherein the pipeline is coupled to the cooling source for cooling the cooling fluid.

The cooling source may be for instance a heat exchanger. Such a heat exchanger may absorb the heat from the cooling fluid. The fluid, which has absorbed the heat from the end sections, may be lead into the cooling source. The cooling source may then absorb the heat from the fluid and may output the fluid in a cooled version.

According to a further embodiment, the interconnecting channel is arranged as a layer and wherein the pipeline is arranged on both sides of the layer.

As described above, the connecting part of the device may be arranged as a kind of circuit board having layers. All the conductors or end sections are then in complete physical contact with the circuit board or connecting part and the cooling may be achieved via conduction. In combination with liquid or fluid type of cooling, this kind of connection may be much more efficient than conventional convection-based air cooling. Furthermore, unlike the conventional method, the cooling may be uniform for all phases and interconnecting channels which may prevent from extreme local heating and breakdown in certain parts of the end coils.

According to a further embodiment, the cooling module comprises a plurality of pipelines.

The cooling module may comprise for instance a pipeline for each interconnecting channel or for each pairs of end sections.

According to a further embodiment, at least a part of the cooling module is made of a thermal conductive material.

By using a thermal conductive material, the cooling module may dissipate heat only based on the contact with the connecting part of the device. For instance, the cooling module may be in direct contact with the end sections.

According to a further embodiment, the thermal conductive material is a metal material. Also any other kind of thermal conductive material may be used.

According to a further embodiment, a stator segment for a stator of an electrical machine, in particular a generator, is provided, wherein the stator segment comprises two interrelated parts of a coil, wherein each part is accommodated in a recess of a body of the stator segment and wherein the end sections project outwardly from the body of the stator segment. The stator segment comprises a cooling connecting device having the above mentioned features.

The cooling connecting device may be arranged at an axial end of the stator segment. The stator segment may also comprise a cooling connecting device as described herein at both axial ends. In such a case, one of the cooling connecting devices may further comprise terminals for connecting the coil of the stator segment to a control device of the generator/electrical machine or any circuitry of the generator/electrical machine.

The stator segment may also comprise more than coil. For instance, the stator segment may comprise three coils of different phases. It is also possible that the stator segment comprises more than one coil for each phase. In such a case, the cooling connecting device may comprise insulation means (for instance layers) to insulate coils of the same phase against each other.

According to a further embodiment, a stator of an electrical machine, in particular a generator, is provided. The stator comprises at least one stator segment with a cooling connecting device having the above mentioned features.

The stator may comprise more than one stator segment. Each stator segment may comprise one cooling connecting device. It is also possible that a plurality of stator segments shares one cooling connecting device. In this case, the cooling connecting device may consist of a plurality of sections, each sections being assigned to one stator segment and being insulated, for instance by using an insulating layer as described above for insulating the sections of the cooling connecting device against each other.

According to a further embodiment, a generator, in particular for a wind turbine, is provided. The generator comprises a rotor and a stator as described above.

Such a generator may be any kind of generator being known in the art. The rotor and the stator may be arranged in a common way, wherein the stator may comprise stator segments with connecting devices according to embodiments as described herein.

It should be understood that features (individually or in any combination) disclosed, described, used for or mentioned in respect to the description of an embodiment of a cooling connecting device, a stator segment, a stator or a generator may also be (individually or in any combination) applied, used for, or employed for a method for dissipating heat from electrically interconnected end sections of two interrelated parts of a coil.

According to a further embodiment, a method for dissipating heat, via a cooling connecting device for a stator segment for a stator of an electrical machine, in particular a generator, from electrically interconnected end sections of two interrelated parts of a coil, wherein each part is accommodated in a recess of a body of the stator segment and wherein the end sections project outwardly from the body of the stator segment. The method comprises connecting the end sections of the two interrelated parts of the coil via terminal means to an interconnecting channel, electrically interconnecting, via the interconnecting channel, the end sections of the two interrelated parts of the coil in such a manner that a closed circuit is provided for the coil, and dissipating heat, via a cooling module being attached to the interconnecting channel, from the end sections via the interconnecting channel.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings to which the invention is not limited.
Fig. 1 illustrates a cooling connecting device and a stator segment according to an embodiment;
Fig. 2 illustrates a connecting part of the cooling connecting device and a stator segment according to a further embodiment;
Fig. 3 illustrates a cooling connecting device according to a further embodiment.

### Detailed Description

The illustration in the drawings is in schematic form. It is noted that in different figures, similar or identical elements are provided with the same reference signs.

As already explained, the end windings of a multi-pole generator utilize a considerable amount of active material, for instance copper, to close the circuit of the currents within each phase, such as in a three phase generator. However, these parts of the windings do not contribute to the torque production of the generator, and to add to their disadvantages, they form a considerable portion of Joule loss which not only reduces the overall efficiency of the generator, but also is conventionally difficult to be cooled away as the coil ends, unlike the active part of the coils, are placed in air which has a poor thermal conductivity compared to stator laminations. End windings can be shortened in length by changing the winding configuration and using fractional slot machines with non-over lapping windings. Furthermore, the end coils are conventionally cooled down using air cooling system and convection whose efficiency is rather poor and may result in local hot spots.

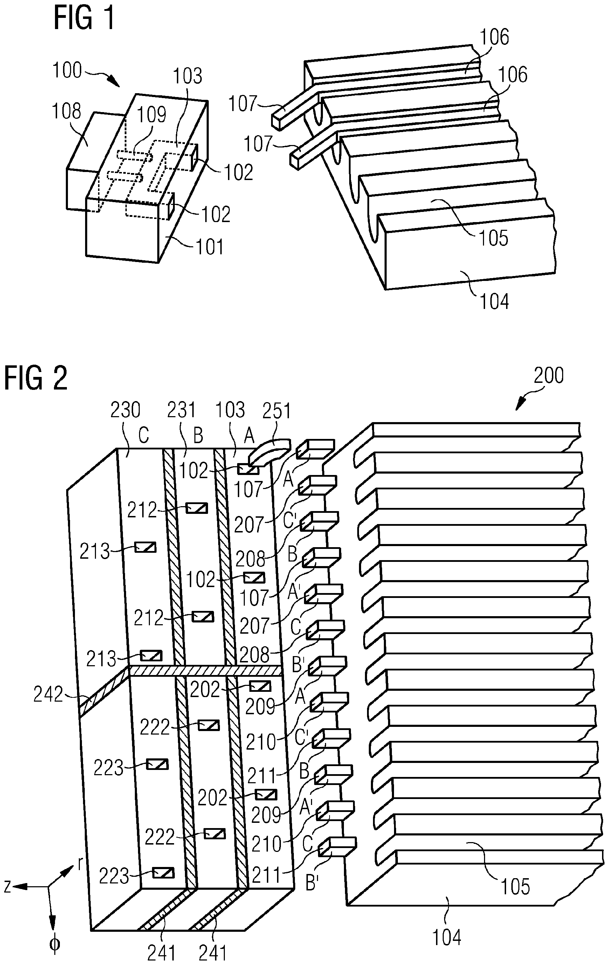

To provide a simple and efficient way to connect the end coils and to cool them at the same time, more general to dissipate heat from the end coils, a cooling connecting device as shown in Figure 1 may be used. In Figure 1, a connection system 100 is shown, wherein a cooling connecting device 101 is used for electrically interconnecting end sections 107 of two interrelated parts 106 of a coil. Each part 106 is accommodated in a recess 105 of a body 104 of a stator segment. The end sections 107 project outwardly from the body 104 of the stator segment. The cooling connecting device 101 comprises an interconnecting channel 103 and terminal means 102. The herein described cooling connecting device is based on the idea to use a circuit board to connect the end coils in an analogical method to the approach as used in electronic board circuits.

The end sections 107 may be inserted or otherwise coupled with the terminal means 102. The interconnecting channel 103 is formed inside the connecting device and is adapted to electrically interconnect the end sections of the two interrelated parts of the coil in such a manner that a closed circuit is provided for the coil. The cooling connecting device may also comprise more than one interconnecting channel and more than two terminal means as will be described below.

The cooling connecting device further comprises a cooling module 108. The cooling module may comprise fluid connections and may be adapted to cool the interconnecting channel 103 via fluid connections 109 or to dissipate heat from the interconnecting channel and thus from the end sections. The fluid connections may be for instance pipes or pipelines leading through the medium in which the interconnecting channels are embedded. When using such an approach, the end sections are fixed in the cooling connection device and can then be cooled. This means that heat occurring at the end sections may be dissipated by the cooling module.

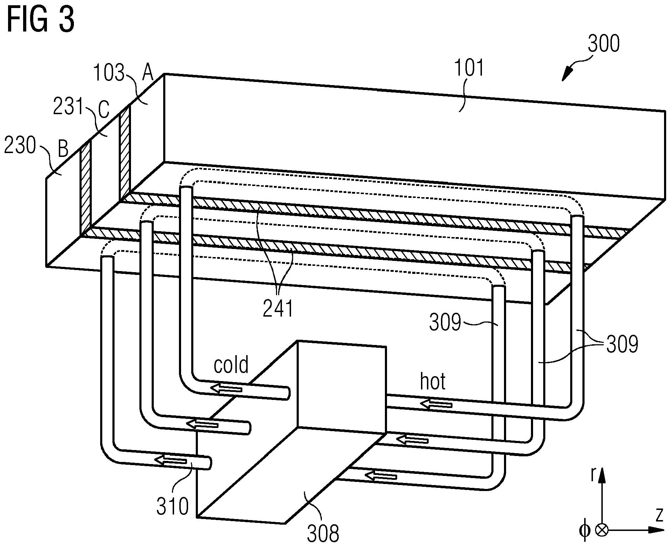

The idea according to the herein described embodiments is that the medium, in which the interconnecting channels 103 are embedded in the cooling connecting device 101, may be electrically insulating. However, the cooling connecting device also acts as the medium with which the thermal loss in the interconnection channel 103 is dissipated, and that any cooling should flow within the cooling connecting device 101 and not connect directly to the interconnecting channel 103 risking an earth. Thus, the cooling connecting device as described herein provides an improved thermal conductivity compared to air, with the cooling also flowing for instance through the connecting part of the cooling connecting device 101, as will be described later in the context of Figure 3.

In the following, examples of further embodiments of the cooling connecting device will be described.

Figure 2 shows a proposed arrangement 200 of the cooling connecting device 101 in the form of a circuit board for a three phase over-lapping winding generator. Each end side of the conventional coils (not shown) are being called conductor bar or end section 107, 207, 208, 209, 210, 211 which can be composed of parallel or serially connected sub-conductors. The parallel or series connection takes meaning in the way the sub-conductors are being connected to other sub-conductors belonging to another conductor bar. The end of the conductive bars is connected to the interconnecting channels 103, 231, 230 on the circuit board, for instance via connective modules 251. The interconnecting channel 103 is associated with phase A and the conductor bars 107, 209. The interconnecting channel 231 is associated with phase C and the conductor bars 207, 210. The interconnecting channel 230 is associated with phase B and the conductor bars 208, 211.

Either the connective modules or the conductive bars may have three different lengths for the proposed type of circuit board, as illustrated in Figure 2. By using different lengths, the conductor bars/end sections of the coils being associated with one phase can be easily connected to the interconnecting channel being associated with the same phase. The connecting device comprises terminal means 102, 202, 212, 222, 213, 223 for connecting the end sections or conductor bars, either directly or via connective modules, to the interconnecting channels. The terminal means are shown here as slots but may also have any other form.

The phases, or the interconnecting channels being associated with the phases, are insulated from one another using an insulation stretch, the vertical stretches numerated 241 in Figure 2. Similarly, each pair of Go and Return side of the conductor bars are insulated from one another via another sets of insulation stretches, horizontal stretches numerated 242. By this, the coils being associated with the same phase may be insulated from each other. The electrical insulation may be used to insulate between different phases and/or non-series conductor bars. Two identical circuit boards or connecting devices may be used in the two axial ends of the stator segment to close the conductor circuits in the two ends.

The interconnecting channels 103, 231, 230 may be used for the connection of end coils. In case of 1-turn winding composed of parallel conductors the channels are simply a connection area between the end bars and intermediate region, which is metallic/electrically conductive. In case of multi-turn winding configuration/serially connected sub-conductors, the channels can be composed of several sub-channels, each of which is insulated from the neighboring sub-channels via an intermediate region (region between terminal means) which is now made of electrical insulation material. These intermediate regions between channels in case of 1-turn winding as well as between sub-channels in case of multi-turn winding configuration can be solid metallic such as copper or aluminium if 1-turn winding composed of parallel conductors is used. In case of multi-turn type of winding, these regions may be of electrical insulation material with high thermal conductivity for better cooling.

If the sub-conductors are connected in parallel or a solid 1-turn conductor concept is applied, apart from the insulation layers, the rest of the cooling connecting device, i.e. the interconnecting layers 103, 231, 230 can be made of highly electrical and thermal conductive material such as copper or aluminium. However, in the case of series sub-conductors (that means that the sub-conductors of the Go conductive bar are intended to be serially connected to the other sub-conductors in the Return conductor bar via the connecting device) the cooling connecting device be majorly made of electrically insulate material with a relatively high thermal conductivity to allow an efficient cooling transfer rate. Although not shown in this figure, a cooling module 108 as described herein may be attached to the cooling connecting device for dissipating heat from the end sections.

A further embodiment 300 is shown in Figure 3. Here, only the layers 103, 231, 230 representing the interconnecting channels of the cooling connecting device 101 are shown for clarity purposes. In this embodiment, the cooling module 109 is represented by a cooling source 308 and pipelines 309, 310.

The pipelines 309, 310 or pipes comprise for example a fluid or liquid for transporting heat. The pipes are connected to the layers 103, 231, 230. For instance, as shown in this figure, the pipes arranged in such a way that they go on one side through the cooling source 308 and on the other side through the heated racks of the circuit board, i.e., are arranged inside the layers. The pipes may also be arranged on both sides of the layers. The walls of the pipes can be metallic or nonmetallic, but metallic pipes may be preferred due to their higher thermal conductivity. The pipes lead the heated fluid to the cooling source 308 (see pipes 309). The cooling source drags the energy out of the heated fluid, conducted by the pipes into the cooling source, and cools it down. The cooled down fluid may then be conducted again by the pipes into a direction of the layers (see pipes 310).

Based on an implementable and rather simple technique, one of the biggest problems in permanent magnet machines regarding the end-winding cooling may be effectively solved. The cooling may be achieved with significantly higher efficiency compared to conventional convection-based air cooling as it is replaced by conduction type of cooling based on fluid flow. Based on the described cooling connecting device and in contrast to conventional type of end coil cooling techniques, a uniform cooling may be achieved. Thereby the winding insulation system and generally the whole generator and wind turbine may become more reliable as extreme local heating and breakdown may be avoided.

It should be noted that the connective modules, the materials and dimensions of the connecting device, the terminal means or the interconnecting channels can be chosen appropriately in such a way that the overall length of the end coil connections or alternatively the overall Joule loss in this region is reduced based on the proposed device. Thereby the overall efficiency is may be improved.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A cooling connecting device (101) for a stator segment for a stator of an electrical machine, in particular a generator, the cooling connecting device (101) for dissipating heat from electrically interconnected end sections (107) of two interrelated parts (106) of a coil, wherein each part is accommodated in a recess (105) of a body (104) of the stator segment and wherein the end sections project outwardly from the body of the stator segment, the cooling connecting device comprising
an interconnecting channel (103) being adapted to electrically interconnect end sections of the two interrelated parts of the coil in such a manner that a closed circuit is provided for the coil,
terminal means (102), wherein the terminal means are formed to connect the end sections of the two interrelated parts of the coil to the interconnecting channel, and
a cooling module (108) being attached to the interconnecting channel and being adapted to dissipate heat from the end sections via the interconnecting channel.

2. The cooling connecting device (101) as set forth in claim 1, wherein the cooling module (109) comprises a pipeline (309, 310) having a cooling fluid, the pipeline being attached to the interconnecting channel for receiving heat from the interconnecting channel.

3. The cooling connecting device (101) as set forth in claim 2, wherein the cooling module (109) comprises a cooling source (308), wherein the pipeline (309, 310) is coupled to the cooling source for cooling the cooling fluid.

4. The cooling connecting device (101) as set forth in any one of the claims 2 or 3, wherein the interconnecting channel (103) is arranged as a layer and wherein the pipeline (309, 310) is arranged on both sides of the layer.

5. The cooling connecting device (101) as set forth in any one of the claims 2 to 4, wherein the cooling module (109) comprises a plurality of pipelines (309, 310).

6. The cooling connecting device (101) as set forth in any one of the preceding claims, wherein at least a part of the cooling module (109) is made of a thermal conductive material.

7. The cooling connecting device (101) as set forth in claim 5, wherein the thermal conductive material is a metal material.

8. A stator segment for a stator of an electrical machine, in particular a generator, the stator segment comprising two interrelated parts of a coil, wherein each part is accommodated in a recess of a body of the stator segment and wherein the end sections project outwardly from the body of the stator segment, the stator segment comprising
a cooling connecting device (101) as set forth in any one of the preceding claims.

9. A stator of an electrical machine, in particular a generator, the stator comprising at least one stator segment as set forth in claim 8.

10. A generator, in particular for a wind turbine, the generator comprising
a rotor and
a stator as set forth in claim 9.

11. Method for dissipating heat, via a cooling connecting device for a stator segment for a stator of an electrical machine, in particular a generator, from electrically interconnected end sections of two interrelated parts of a coil, wherein each part is accommodated in a recess of a body of the stator segment and wherein the end sections project outwardly from the body of the stator segment, the method comprising
connecting the end sections of the two interrelated parts of the coil via terminal means to an interconnecting channel,
electrically interconnecting, via the interconnecting channel, the end sections of the two interrelated parts of the coil in such a manner that a closed circuit is provided for the coil, and
dissipating heat, via a cooling module being attached to the interconnecting channel, from the end sections via the interconnecting channel.
